# EUROPEAN PATENT SPECIFICATION

(11) **EP 2 286 115 B1**
(45) Date of publication and mention of the grant of the patent: **05.10.2011**
(21) Application number: 09785888.0
(22) Date of filing: 29.04.2009
(51) Int. Cl.: F16H 19/00

(54) **HIGH TORQUE LIMITED ANGLE COMPACT AND LIGHTWEIGHT ACTUATOR**
KOMPAKTER UND LEICHTGEWICHTIGER AKTUATOR MIT HOHEM DREHMOMENT UND BESCHRÄNKTER WINKELFUNKTION
ACTIONNEUR LÉGER ET COMPACT À ANGLE LIMITÉ ET COUPLE ÉLEVÉ

(30) Priority: 30.04.2008 IT PI20080037
(43) Date of publication of application: 23.02.2011
(73) Proprietor: Scuola Superiore Di Studi Universitari S. Anna, 56127 Pisa (IT)
(72) Inventor: BERGAMASCO, Massimo, I-56010 Castelmaggiore - Calci (PI) (IT); SALSEDO, Fabio, I-56125 Pisa (IT); LUCCHESI, Nicola, I-55100 Lucca (IT)
(74) Representative: Celestino, Marco
(86) International application number: PCT/IB2009/005420
(87) International publication number: WO 2010/125417

(56) References cited:
- WO-A-2004/083683
- US-A1- 2006 169 086

## Description

### Field of the invention

The present invention relates to robotics and, in particular, it relates to a new type of actuator that can be implemented of various types of robot, such as haptic interfaces, used in Virtual Reality Systems (VRS) and in Tele-Operation Systems (TOS) or, still, Exoskeletons for Human Performances Augmentation, EHPA. Other possible application fields are Active Prostheses and Orthoses as well as Rehabilitation Robotics.

The usability and performances of all these types of robotic appliances are mainly determined by the mechanical features of the actuators that are necessary for their implementation. In particular, actuators are desirable with high torque/weight ratio, torque/size ratio, high mechanical efficiency, low friction and limited play,

### Description of the prior art

The actuators in engineering are transducers that are capable of transforming an input variable, normally electric, into a mechanical movement. Some examples of actuators are parts of a robot that interact with external systems as well as gripping mechanisms, mechanical arms and other moving parts.

In the prior art many actuator devices are provided, that are mainly comprised of an electric, pneumatic or hydraulic motor, by a reduction unit and by a mechanical transmission.

The use of a reduction unit in the implementation of actuators allows to augment the torque/weight and torque/size ratios, but with the disadvantage of reducing mechanical efficiency and increasing friction and mechanical play.

Among the various known techniques of mechanical reduction, the ball nut screw allows obtaining the better performances. In fact, the weight of the reduction unit is remarkably more limited, and a mechanical efficiency that is relatively higher and a friction and backlash sensibly lower or even near to zero are obtained.

Such technique allows obtaining actuators with limited angular span, however enough to meet the requirements of the previously cited robotic applications in the field of the present invention. An additional problem that affects this technique with respect to the other (for example epicyclic reduction gears), is that the movement of the screw has to be converted from linear to rotational. This conversion can be effected simply using tendons and idle and driven pulleys.

With reference, for example, to WO2004/083683, an actuator device is described comprising an electric motor, a reduction ball nut screw unit, two pulleys, two tendons, and guides that prevent the rotation of the screw on its own axis. The axis of the first pulley, which is a driven pulley, is coincident to the output axis of the actuator, whereas the second pulley, which is an idle pulley, is arranged opposite to the driven pulley. The first cable is connected to a first end of the screw as well as it is directly connected to the driven pulley, whereas the second cable is wound on the idle pulley and it is connected to the other end of the screw and it is connected also to the driven pulley.

This way, the driven pulley is caused to rotate when one of the two tendons of the transmission is pulled by the ball nut screw. When the screw translates, for example towards left, the first cable of the transmission is stretched and the driven pulley rotates in a counterclockwise direction. Similarly, a translation towards the right of the screw the second cable of the transmission is stretched, causing the rotation in a clockwise direction of the driven pulley.

Such solution, with a single motor/reduction gear screw, develops torques in both clockwise and counterclockwise rotation directions.

This device, however has the drawback of a relatively high longitudinal encumbrance that is as much greater as the translation stroke of the screw and the radius of the pulleys increase.

In turn the size is directly responsive to the mechanical requirements of the actuator: maximum torque demand at the output axis and angular travel. With a same electric motor and ball nut screw, the longitudinal encumbrance of the actuator increases as these requirements increase.

A reduction of the longitudinal encumbrance of the actuators is a desirable goal in the implementation of the cited robot types, in order to achieve kinematical implementations that are isomorphous with respect to the physiological features of the human limbs.

Another example of a device of prior art is disclosed in the closest prior art document US2006/169086. This document discloses an intermediate segment of a control or other arm, fitted with a transmission for supporting a following segment is made up of a motor which is displaced towards the other end of the segment, beyond the joint to a previous segment in order to reduce the toppling moment on the segment. The transmission includes a movement conversion device using a screw and nut.

### Summary of the invention

It is a feature of the present invention to provide an actuator with torque/weight and torque/size ratios that are improved with respect to the prior art.

It is also a feature of the present invention to provide an actuator that presents a high mechanical efficiency and low friction.

It is a further feature of the present invention to provide an actuator that has a high structural stiffness as well as a close to zero mechanical play.

These and other objects are achieved by an actuator that is adapted to provide a rotation and a torque as an output, comprising:
- a driven pulley;
- a flexible tie-member, wherein said tie-member is wound in part about said driven pulley and has a first and a second tie-member portions that have respectively a first and a second ends;
- a linear actuator that has a movable element that is adapted to provide a movement according to two opposite directions; characterized in that it further comprises
- an inversion mechanism that is connected to said movable element, said inversion mechanism having:
- an input portion that is connected to said movable element and to said first end of said flexible tie-member,
- an output portion that is connected to said second end of said flexible tie-member;
   said inversion mechanism being such that
   - when said movable element moves in said first direction an input pull movement is created of said first tie-member portion that provides a torque action to said pulley in a first rotation direction, with said output portion that effects a compliant output movement for carrying said second tie-member portion,
   and
   - when said movable element moves in said second direction, an output pull movement is created of said second tie-member portion that provides a torque action to said pulley in a second rotation direction that is opposite to said first rotation direction, such that said input portion effects an input movement that follows said movable element in a compliant way for carrying said first tie-member portion.

Advantageously, said linear actuator has said movable element that is adapted to provide a movement along a line according to two opposite directions and mounted with respect to said driven pulley such that said line is substantially tangential to said driven pulley, said inversion mechanism being such that when said input portion is moved along said line (input straight line) for a determined movement amount, said output portion is moved along another line (output straight line), which is also substantially tangential to said pulley, for a same movement amount.

In particular, when said input portion is moved along said straight line, the total length of said flexible tie-member is unchanged.

Advantageously, said tie-member portion, which is wound about said driven pulley, is connected to said driven pulley.

In a possible embodiment of the invention, said tie-member portion that is wound about said pulley is discontinued and connected to said driven pulley in two respective discontinuation points.

Preferably, said linear actuator comprises:
- a rotational motor that is adapted to provide a circular movement;
- a reduction unit that is adapted to receive said circular movement and to turn it into a linear movement;
- a mechanical transmission that transfers said linear movement to said movable element.

Preferably, said reduction unit is a ball nut/screw device, which is suitable to ensure less rolling resistance between the screw and the nut, as well as to ensure a high mechanical efficiency and minimum play, up to zero, in the two movement directions of said movable element.

Advantageously, said rotational motor is an electric hollow torque motor that has a high torque/weight and torque/size ratios and is such that it allows an easy integration with said nut/screw reduction device is achieved.

Advantageously, said inversion mechanism, in a first exemplary embodiment, is a pantograph mechanism comprising a support arm and a four-bar linkage, wherein an end of said arm forms said input portion and a vertex of said pantograph, opposite to said end, forms said output portion.

In particular, said pantograph mechanism is pivotally connected to the fixed structure (frame) of the actuator at a point that is located on a base bar of said four-bar linkage and on the junction between said vertex of said pantograph and said end of said arm.

Preferably, said inversion mechanism, in a second exemplary embodiment, comprises:
- a gear train consisting of a first and a second gears, having a same primitive radius, connected indirectly by an intermediate gear, a stiff support to which said gears are pivotally connected, a first arm that is integral to said first gear and a second arm that is integral to said second gear, said first and second arm having respective ends that forms said input portion and said output portion of said inversion mechanism.

Preferably, said gears are straight-cut gears.

Advantageously, said inversion mechanism, in a third exemplary embodiment comprises:
- a auxiliary movable element that has a movement that is opposite to said movable element, said opposite movement of said auxiliary movable element being obtained directly from said motor, wherein said auxiliary movable element forms said output portion of said inversion mechanism.

Advantageously, said opposite movement of said auxiliary movable element is obtained directly from said motor by means:
- a first gear that is adapted to pick up said circular movement from said motor;
- a second gear that meshes with said first gears,
- a nut/screw coupling between said second gear and said auxiliary movable element.

Advantageously, said movable element and said auxiliary movable element are connected to each other by an antirotation device that blocks a rotation of the screws about their own axis.

In particular, said antirotation device comprises two stiff links, each having a first and a second ends, said links pivotally connected to each other at said first end and pivotally connected to said movable element and said auxiliary movable element at said second ends.

Advantageously, said auxiliary movable element has a movement that is opposite to said movable element such that if said movable element moves according to said first or according to said second direction of a measured amount, said auxiliary movable element moves in an opposite direction according at a same movement amount.

In a possible exemplary embodiment, said input and output lines, along which said input portion and output portion of the inversion mechanism move, are parallel to each other.

In a preferred exemplary embodiment, said input and output lines are at a predetermined angle with respect to each other, such that they cross each other at a point that is located at a same side of said inversion mechanism with respect to said pulley.

Advantageously, said first and second line form an angle that is set between 5 and 45°, preferably between 10 and 35°, in particular about 20 and 30°. This way, the transversal size of the actuator is sensibly low.

### Brief description of the drawings

The invention will be made clearer with the following description of an exemplary embodiment thereof, exemplifying but not limitative, with reference to the attached drawings in which:
- figure 1 shows an double pulley actuating device, according to the prior art;
- figure 2 shows a diagrammatical general view of the high torque compact actuator, according to the invention;
- figure 3 shows a first exemplary embodiment that adopts as inversion mechanism a pantograph device;
- figure 4 shows a diagrammatical operative view of the actuator with the pantograph mechanism of Fig. 3;
- figure 5 shows an exemplary embodiment of the pantograph mechanism of Fig. 4;
- figure 6 shows a perspective view of limited angle and high torque compact actuator, with a pantograph mechanism, according to the invention;
- figure 7 diagrammatically shows a second exemplary embodiment of the actuator that uses, as inversion mechanism, a gear mechanism;
- figure 8 shows, in detail the gear mechanism of Fig. 7;
- figure 9 shows a third exemplary embodiment of the inversion mechanism that adopts a second nut/screw device.

### Detailed description of some exemplary embodiments

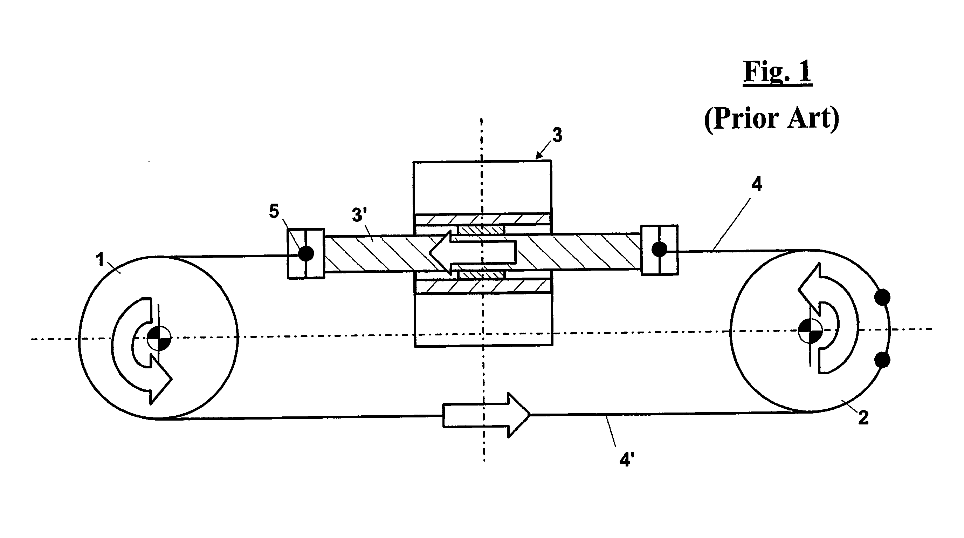

With reference to Fig. 1, an actuator is shown according to the prior art, which comprises mainly a first pulley 1 and a second 2 pulley, a motor 3, a ball nut/screw device 5 and two branches of tendons 4 and 4' that allow to transfer the movement in both rotation directions of the pulleys. In particular, the axis of pulley 2, which is a driven pulley, is coincident to the output axis of the actuator, whereas the pulley 1, which is an idle pulley, is arranged on the rear part of a motor/reduction gear. The first portion, or branch, of tendon 4 is connected to one end of the ball nut/screw device 5, as well as it is directly connected to driven pulley 2, whereas the second portion, or branch, of tendon 4' is wound on idle pulley 1 and it is connected to the second end of the ball nut/screw device and, also, to driven pulley 2.

This way, driven pulley 2 is caused to rotate in a clockwise, or counterclockwise, direction, according to which of the two tendons 4 and 4' of the transmission is pulled. For example by moving screw 3' towards left, branch 4 of the transmission is stretched such that driven pulley 2 is caused to rotate in a counterclockwise direction. Vice-versa, a movement towards the right of the screw causes second branch 4' of the transmission to be stretched such that driven pulley 2 rotates in a clockwise direction. Additional devices, in a way not shown in Fig.1, are necessary for avoiding the rotation of the screw about its own axis.

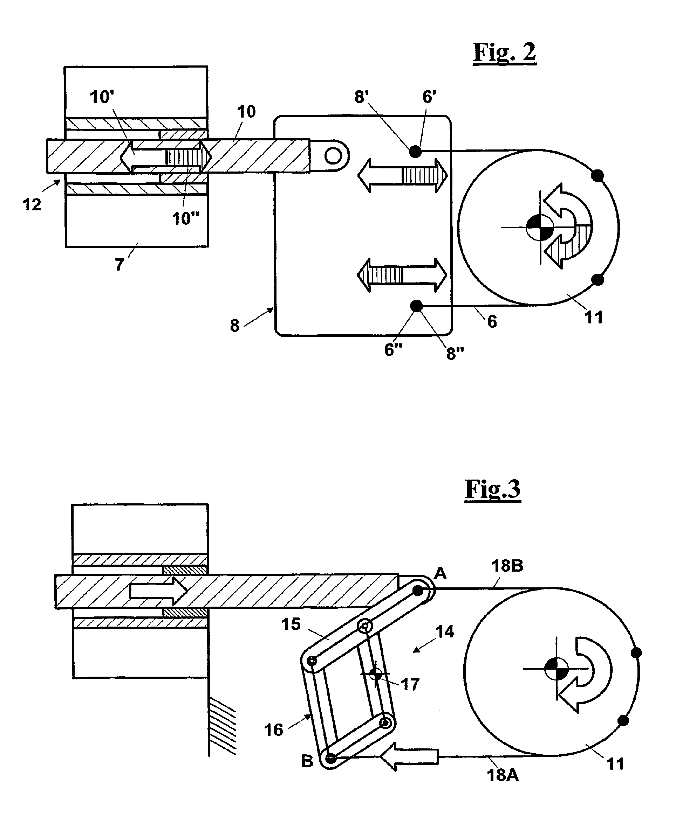

Figure 2 shows a diagrammatical view of a rotational actuator, according to the invention, that is adapted to transmit to the output axis a high torque for a limited angular travel.

More specifically, the actuator comprises a driven pulley 11, a flexible tie-member 6, which is wound about driven pulley 11, a linear actuator 7 and an inversion mechanism 8. In detail, flexible tie-member 6 is wound about driven pulley 11 and it has a first and a second tie-member portions that have respectively a first 6' and a second 6" end.

According to the invention, linear actuator 7 has a movable element 10 that carries out a linear movement along a line according to two opposite directions 10' and 10" . Linear actuator 7 is located with respect to driven pulley 11 such that the line is substantially tangential to driven pulley 11.

As shown in Fig. 2, inversion mechanism 8 has an input portion 8' that is connected to the movable element 10 and to the first end 6' of flexible tie-member 6, and an output portion 8 " that is connected to the second end 6" of said flexible tie-member.

The inversion mechanism is such that when input portion 8' moves along a line (first straight line), which is tangential to the driven pulley, for a certain an amount the output portion 8" moves along another line (second straight line), which is also tangential to the driven pulley, for a same movement amount, such that the total length of tie-member 6 is unchanged.

In particular, when the linear actuator moves in direction 10', the first portion of flexible tie-member 6 is stretched, driven pulley 11 rotates in a counterclockwise direction and the inversion mechanism is not loaded. Vice-versa, when the linear actuator moves in direction 10", the second portion of the flexible tie-member is stretched, driven pulley 11 rotates in a clockwise direction and the mechanism is loaded by the forces of the transmission.

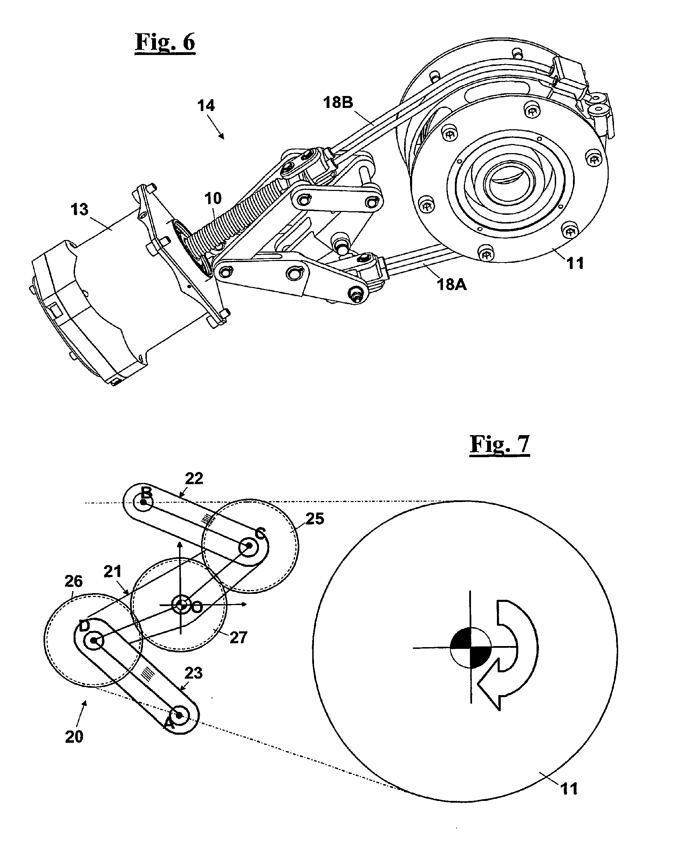

Always with reference to Fig. 2, linear actuator 10 comprises a rotational motor (visible in Fig. 6) that is adapted to provide a circular movement, a reduction unit that is adapted to receive the circular movement by the motor turning it into a linear movement, and a mechanical transmission that transfers the linear movement to the movable element 10.

In particular, the reduction unit is a ball nut/screw device 12, which is suitable to maximally reduce friction between screw and nut, and to obtain a high mechanical efficiency and a low mechanical play, up to zero. Furthermore, rotational motor 13 (visible in Fig. 6), according to a preferred exemplary embodiment is an electric Hollow Torque Motor, which has a high torque/weight and torque/size ratios such that it allows an easy integration with the nut/screw reduction device.

Figure 3 shows inversion mechanism 8 in a first exemplary embodiment, which consists of a pantograph mechanism 14 comprising a support arm 15 and a four-bar linkage 16, in which an end A of arm 15 forms input portion 8' of the inversion mechanism and a vertex B of pantograph 16, opposite to end A, forms output portion 8" of the inversion mechanism (diagrammatically visible in Fig. 2).

The pantograph mechanism is pivotally connected to the fixed structure of the actuator (frame) at hinge 17, which is located on a base bar of four-bar linkage 16 and, in particular at the junction between the vertex of the pantograph B, which forms output portion 8", and end A of arm 15, which forms input portion 8'.

As shown in Fig. 3, the two portions 18A and 18B of the flexible tie-member are connected to driven pulley 11 and to points an and B of the pantograph 14.

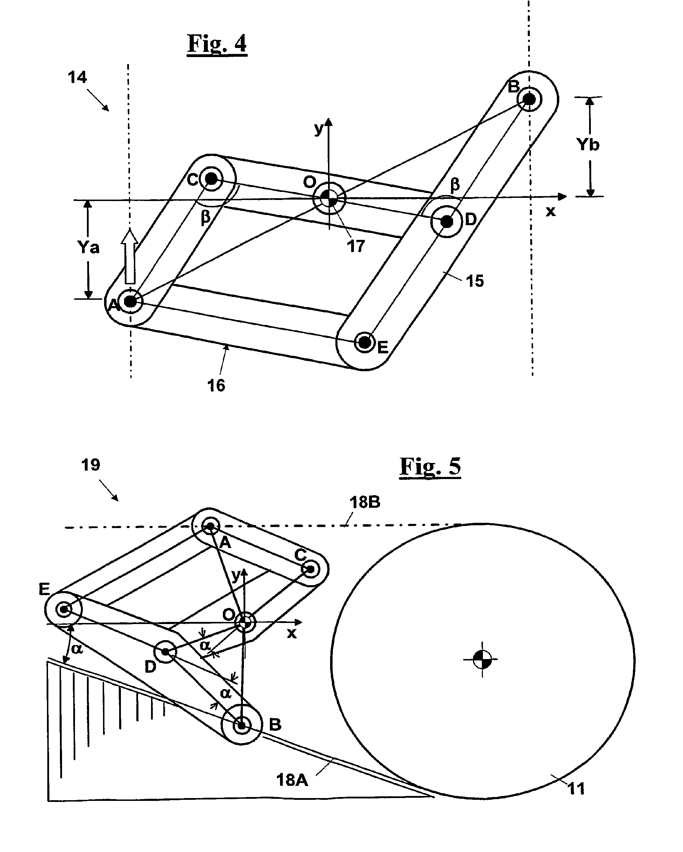

Figure 4 shows, in detail, the pantograph mechanism 14.

The articulation hinges of the pantograph are located such that it is OD=OC and CA=DB. Owing to the features of pantograph 16, the angle formed between the segments OD and DB is equal to the angle consisting of segments OC and CA (indicated as P in Fig. 4), so that triangles OCA and ODB are equal to each other. Therefore, if point A is moved according to direction Y for an amount Ya, point B is moved according to direction Y for a same movement amount Yb, but in the opposite direction, i.e. it is Yb=Ya. Similarly, if point A is moved in a direction x for a same movement amount Xa, point B is moved in a direction X for a same movement amount Xb, but in an opposite direction, i.e. it is Xb=Xa. According to this geometric feature, if an external force is applied to point A, in order to achieve a static balance of mechanism 14 it is necessary to apply another force on point B with the following force components: F_{Bx} = -F_{Ax} and F_{By} = -F_{Ay}.

With respect to the prior art, this solution allows to minimize remarkably the longitudinal encumbrance of the actuator. Another advantage is that the additional mechanisms for avoiding the rotation of the screw are not necessary, owing to the planar kinematics of the pantograph.

With reference to Fig. 5, an exemplary embodiment is shown 19 of the pantograph mechanism that allows a reduction of the transversal size. In particular, as indicated in Fig. 5, a different configuration of the hinges of the mechanism allows to put an angle α between adjacent segments OD and OC, and between adjacent segments DE and DB, always maintaining OD=OC and AC=DB. If quadrilateral DCAE is still a pantograph, i.e. DC=AE and still AC=DE, triangles ODB and ACO are still equal. The result of this change is that if point A moves along a straight line, point B moves still along a line, which now is at an angle α with respect to the other line. The main advantage of this configuration is a sensitive reduction of the transversal size of the actuator. furthermore, it is possible to provide actuators with angular span larger than 180°.

Concerning the size of the mechanical components of the inversion mechanism, in a way referred to the size of the driven pulley, it is possible to achieve inclinations between the two lines of 45° and more, even if inclinations between 20° and 30° degrees are preferable.

With reference to Fig. 6 a perspective view is shown of an exemplary embodiment of the actuator, according to the invention, which adopts as inversion mechanism the pantograph device. In particular, the electric motor 13, and the screw 10 that translates along a line tangential to the driven pulley are shown. Furthermore, Fig. 6 shows the pantograph mechanism 14 and the two branches of tendons 18A and 18B that are wound on driven pulley 11.

Figure 7 shows a second exemplary embodiment of the inversion mechanism, consisting of a gear mechanism 20 that is formed, in detail, by a first gear 25 and by a second gear 26, having a same primitive radius and connected indirectly by an gear idle 27 and by a stiff support 21 to which the gears are pivotally connected. Furthermore, mechanism 20 comprises a first arm 22, which is integral to first gear 25, and a second arm 23, which is integral to the second gear 26. In particular, the end of the first and second arm 22 and 23 form, respectively, the input and the output portions of the inversion mechanism.

According to a preferred exemplary embodiment the gearing 25,26 and 27 are straight-cut gears.

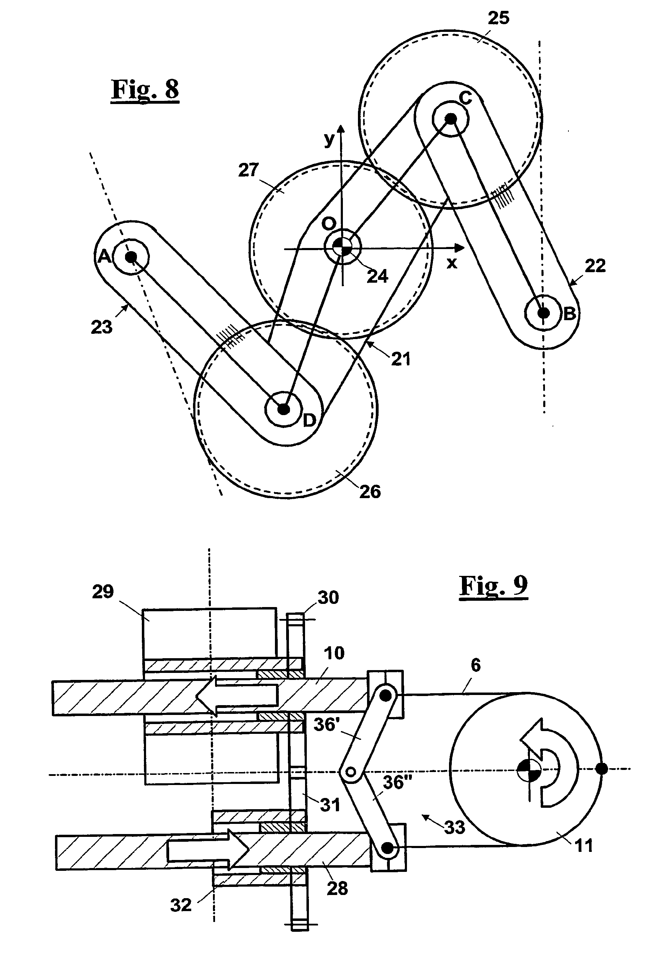

Figure 8 shows, in an enlarged view, the inversion gear mechanism of Fig. 7. This solution has, also, a point connected to the fixed structure of the actuator and, furthermore, the lengths of the connections allow to achieve the same conditions of the pantograph mechanism as it is described above. Owing to these conditions, triangles ODA and OCB are still equal. Also this exemplary embodiment allows obtaining movements of the output portion on a line that is at an angle with respect to the line on which is moved the input portion moves, respecting the basic condition that the movement of output portion B is identical and opposite to the movement of input portion A. Furthermore, mechanism 20 has performances that are comparable, versus side and longitudinal size, to the pantograph mechanism of Fig. 3.

With reference, finally, to Fig. 9 a third exemplary embodiment is shown of the inversion mechanism.

In particular, it comprises an auxiliary movable element 28 having a movement that is opposite to that of movable element 10 and according to which the opposite movement of auxiliary movable element 28 is obtained directly by the motor 29 and where auxiliary movable element 28 forms the output portion 8" of the inversion mechanism (diagrammatically visible in Fig. 3).

As shown in Fig. 9, the opposite movement of auxiliary movable element 28 is obtained directly by motor 29 through a first gear 30 that is adapted to get the circular movement from motor 29. The mechanism, furthermore, comprises a second gear 31, which meshes with the first gear 30 and a nut screw coupling 32 between the second gear 31 and auxiliary movable element 28.

Furthermore, movable element 10 and auxiliary movable element 28 are connected to each other by an antirotation mechanism 33 that blocks a rotation of the screws about their own axis.

In particular, said antirotation mechanism 33 comprises two stiff links 36' and 36", each having a first and a second ends, said links pivotally connected to each other at the first end and pivotally connected to the movable element 10 and to auxiliary movable element 28 at their second ends.

The foregoing description of a specific embodiment will so fully reveal the invention according to the conceptual point of view, so that others, by applying current knowledge, will be able to modify and/or adapt for various applications such an embodiment without further research and without parting from the invention, and it is therefore to be understood that such adaptations and modifications will have to be considered as equivalent to the specific embodiment. The means and the materials to realise the different functions described herein could have a different nature without, for this reason, departing from the field of the invention. It is to be understood that the phraseology or terminology employed herein is for the purpose of description and not of limitation.

## Claims

1. An actuator that is adapted to provide a rotation and a torque as an output, comprising:
a driven pulley (11),
- a flexible tie-member (6), wherein said tie-member (6) is wound in part about said driven pulley (11) and has a first and a second tie-member portions that have respectively a first and a second ends (6', 6");
- a linear actuator (7) that has a movable element (10) which is adapted to provide a movement according to two opposite directions (10', 10");
**characterized in that** it further comprises:
- an inversion mechanism (8) that is connected to said movable element (10), said inversion mechanism (8) having:
- an input portion (8') that is connected to said movable element (10) and to said first end (6') of said flexible tie-member (6),
- an output portion (8") that is connected to said second end (6") of said flexible tie-member (6);
and **in that** said inversion mechanism (8) is such that:
- when said movable element (10) moves in said first direction (10') an input pull movement is created of said first tie-member portion that provides a torque action to said pulley (11) in a first rotation direction, with said output portion (8") that effects a compliant output movement for carrying said second tie-member portion,
and
- when said movable element (10) moves in said second direction, an output pull movement is created of said second tie-member portion that provides a torque action to said pulley (11) in a second rotation direction that is opposite to said first rotation direction, such that said input portion effects an input movement that follows said movable element in a compliant way for carrying said first tie-member portion.

2. An actuator, according to claim 1, wherein said linear actuator has said movable element that is adapted to provide a movement along a line according to two opposite directions and mounted with respect to said driven pulley such that said line is substantially tangential to said driven pulley, said inversion mechanism being such that when said input portion is moved along said line (input straight line) for a determined movement amount, said output portion is moved along another line (output straight line), which is also substantially tangential to said pulley, for a same movement amount.

3. An actuator, according to claim 1, wherein when said input portion is moved along said straight line, the total length of said flexible tie-member is unchanged.

4. An actuator, according to claim 1, wherein said tie-member portion which is wound about said driven pulley is connected to said driven pulley.

5. An actuator, according to claim 1, wherein said tie-member portion that is wound about said pulley is discontinued and connected to said driven pulley in two respective discontinuation points.

6. An actuator, according to claim 1, wherein said linear actuator comprises:
- a rotational motor that is adapted to provide a circular movement;
- a reduction unit that is adapted to receive said circular movement and to turn it into a linear movement;
- a mechanical transmission that transfers said linear movement to said movable element.

7. An actuator, according to claim 6, wherein said reduction unit is a ball nut/screw device, which is suitable to ensure less rolling resistance between the screw and the nut, as well as to ensure a high mechanical efficiency and minimum play, up to zero, in the two movement directions of said movable element.

8. An actuator, according to claim 6, wherein said rotational motor is an electric hollow torque motor, which has high torque/weight and torque/size ratios such that an easy integration with said nut/screw reduction device is achieved.

9. An actuator, according to claim 1, wherein said inversion mechanism is a pantograph mechanism comprising a support arm and a four-bar linkage, wherein an end of said arm forms said input portion and a vertex of said pantograph, opposite to said end, forms said output portion and wherein said pantograph mechanism is pivotally connected to the fixed structure of the actuator (frame) at a point that is located on a base bar of said four-bar linkage and on the junction between said vertex of said pantograph and said end of said arm.

10. An actuator, according to claim 1, wherein said inversion mechanism
comprises:
- a gear train consisting of a first and a second gears, having a same primitive radius, connected indirectly by an intermediate gear, a stiff support to which said gears are pivotally connected, a first arm that is integral to said first gear and a second arm that is integral to said second gear, said first and second arm having respective ends that forms said input portion and said output portion of said inversion mechanism.

11. An actuator, according to claim 10, wherein said gears are straight-cut gears.

12. An actuator, according to claim 1, wherein said inversion mechanism
comprises:
- an auxiliary movable element that has a movement that is opposite to said movable element, said opposite movement of said auxiliary movable element being obtained directly from said motor, wherein said auxiliary movable element forms said output portion of said inversion mechanism.

13. An actuator, according to claim 12, wherein said opposite movement of said auxiliary movable element is obtained directly from said motor by means of:
- a first gear that is adapted to pick up said circular movement from said motor;
- a second gear that meshes with said first gears,
- a nut/screw coupling between said second gear and said auxiliary movable element.

14. An actuator, according to claim 12, wherein said movable element and said auxiliary movable element are connected to each other by an antirotation device that blocks a rotation of the screws about their own axis.

15. An actuator, according to claim 14, wherein said antirotation device comprises two stiff links, each having a first and a second ends, said links pivotally connected to each other at said first end and pivotally connected to said movable element and said auxiliary movable element at said second ends.

16. An actuator, according to claim 1, wherein said input and output lines along which said input and output portions of the inversion mechanism are parallel to each other.

17. An actuator, according to claim 1, wherein said input and output lines along which said input and output portions of the inversion mechanism move are at a predetermined angle with respect to each other, such that extensions of such lines cross each other in a point that is located at a same side of said inversion mechanism with respect to said pulley.

## Patentansprüche

1. Stellglied, das dazu geeignet ist, eine Drehung und ein Drehmoment als Ausgang vorzusehen, umfassend:
- eine angetriebene Scheibe (11);
- ein flexibles Verbindungselement (6), wobei das Verbindungselement (6) teilweise um die Abtriebscheibe (11) gewickelt ist und einen ersten und einen zweiten Verbindungselementabschnitt aufweist, die jeweils ein erstes und ein zweites Ende (6', 6") aufweisen;
- ein lineares Stellglied (7), das ein bewegliches Element (10) aufweist, welches dazu geeignet ist, eine Bewegung gemäß zwei entgegengesetzten Richtungen (10', 10") vorzusehen;
**dadurch gekennzeichnet, dass** es ferner Folgendes umfasst:
- einen Umkehrmechanismus (8), der mit dem beweglichen Element (10) verbunden ist, der Umkehrmechanismus (8) umfasst:
- einen Eingangsabschnitt (8'), der mit dem beweglichen Element (10) und dem ersten Ende (6') des flexiblen Verbindungselements (6) verbunden ist,
- einen Ausgangsabschnitt (8"), der mit dem zweiten Ende (6") des flexiblen Verbindungselements (6) verbunden ist;
und dass der Umkehrmechanismus (8) derart ist, dass:
- wenn sich das bewegliche Element (10) in der ersten Richtung (10') bewegt, eine Eingangszugbewegung von dem ersten Verbindungselement geschaffen ist, die die Scheibe (11) mit einer Drehmomentwirkung in einer ersten Drehrichtung versieht, wobei der Ausgangsabschnitt (8") eine konforme Ausgangsbewegung zum Tragen des zweiten Verbindungselementabschnitts ausführt, und
- wenn sich das bewegliche Element (10) in der zweiten Richtung bewegt, eine Ausgangszugbewegung von dem zweiten Verbindungselement geschaffen ist, die die Scheibe (11) mit einer Drehmomentwirkung in einer zweiten Drehrichtung versieht, welche der ersten Drehrichtung entgegengesetzt ist, sodass der Eingangsabschnitt eine Eingangsbewegung ausführt, die dem beweglichen Element zum Tragen des ersten Verbindungselementabschnitts konform folgt.

2. Stellglied nach Anspruch 1, wobei das lineare stellglied das bewegliche Element aufweist, das dazu geeignet ist, eine Bewegung entlang einer Linie gemäß zwei entgegengesetzten Richtungen vorzusehen und derart bezüglich der Abtriebscheibe angebracht ist, dass die Linie im Wesentlichen tangential zu der Abtriebscheibe ist, wobei der Umkehrmechanismus derart ist, dass, wenn der Eingangsabschnitt über einen bestimmten Bewegungsbetrag die Linie (gerade Eingangslinie) entlang bewegt ist, der Ausgangsabschnitt über denselben Bewegungsbetrag eine andere Linie (gerade Ausgangslinie) entlang bewegt ist, die ebenfalls im Wesentlichen tangential zu der Scheibe ist.

3. Stellglied nach Anspruch 1, wobei, wenn der Eingangsabschnitt entlang der geraden Linie bewegt ist, die Gesamtlänge des flexiblen Verbindungselements unverändert ist.

4. Stellglied nach Anspruch 1, wobei der Verbindungselementabschnitt, der um die Abtriebscheibe gewickelt ist, mit der Abtriebscheibe verbunden ist.

5. Stellglied nach Anspruch 1, wobei der Verbindungselementabschnitt, der um die Scheibe gewickelt ist, unterbrochen ist und an zwei jeweiligen Unterbrechungspunkten mit der Abtriebscheibe verbunden ist.

6. Stellglied nach Anspruch 1, wobei das lineare Stellglied Folgendes umfasst:
- einen Drehantrieb, der zum Vorsehen einer Kreisbewegung geeignet ist;
- eine Reduktionseinheit, die zum Aufnehmen der Kreisbewegung und zum Umwandeln derselben in eine lineare Bewegung geeignet ist;
- eine mechanische Transmission, die die lineare Bewegung auf das bewegliche Element überträgt.

7. Stellglied nach Anspruch 6, wobei die Reduktionseinheit eine Kugelspindelmutter/Spindel-Vorrichtung ist, die dazu geeignet ist, weniger Rollwiderstand zwischen der Schraube und der Mutter zu gewährleisten, sowie eine hohe mechanische Effizienz und minimales Spiel, bis zu null, in den zwei Bewegungsrichtungen des beweglichen Elements zu gewährleisten.

8. Stellglied nach Anspruch 6, wobei der Drehmotor ein elektrischer Hohlwellentorquemotor ist, der hohe Moment/Gewicht- und Moment/Größen-Verhältnisse aufweist, sodass eine leichte Eingliederung mit der Spindelmutter-/Spindel-Reduktionsvorrichtung erzielt ist.

9. Stellglied nach Anspruch 1, wobei der Umkehrmechanismus ein Pantografmechanismus ist, umfassend einen Stützarm und ein Gestänge mit vier Stangen, wobei ein Ende des Arms den Eingangsabschnitt ausbildet und ein Scheitel des Pantografen gegenüber dem Ende den Ausgangsabschnitt ausbildet, und wobei der Pantografmechanismus drehbar mit der starren Struktur des Stellglieds (Rahmens) an einem Punkt verbunden ist, der sich auf einer Grundstange des Gestänges mit vier Stangen und an der Verbindungsstelle zwischen dem Scheitel des Pantografen und dem Ende des Arms befindet.

10. Stellglied nach Anspruch 1, wobei der Umkehrmechanismus Folgendes umfasst:
- einen Getriebezug, der aus einem ersten und einem zweiten Rad mit demselben Grundradius, die indirekt durch ein Zwischenrad verbunden sind, einer steifen Stütze, mit der die Räder drehbar verbunden sind, einem ersten Arm, der mit dem ersten Rad einstückig ist, und einem zweiten Arm, der mit dem zweiten Rad einstückig ist, besteht, wobei der erste und zweite Arm jeweilige Enden aufweisen, die den Eingangsabschnitt und den Ausgangsabschnitt des Umkehrmechanismus ausbilden.

11. Stellglied nach Anspruch 10, wobei die Getriebe eine Geradeverzahnung aufweisen.

12. Stellglied nach Anspruch 1, wobei der Umkehrmechanismus Folgendes umfasst:
- ein bewegliches Hilfselement, das eine Bewegung aufweist, die dem beweglichen Element entgegengesetzt ist, wobei die Gegenbewegung des beweglichen Hilfselements direkt aus dem Motor erzielt ist, wobei das bewegliche Hilfselement den Ausgangsabschnitt des Umkehrmechanismus ausbildet.

13. Stellglied nach Anspruch 12, wobei die Gegenbewegung des beweglichen Hilfselements direkt aus dem Motor erzielt ist, mithilfe von:
- einem ersten Rad, das dazu geeignet ist, die Kreisbewegung aus dem Motor aufzunehmen;
- einem zweiten Rad, das mit dem ersten Rad kämmt,
- einer Spindelmutter/Spindel-Kupplung zwischen dem zweiten Rad und dem beweglichen Hilfselement.

14. Stellglied nach Anspruch 12, wobei das bewegliche Element und das bewegliche Hilfselement durch eine Gegenlaufvorrichtung miteinander verbunden sind, die eine Drehung der Spindeln um ihre eigene Achse blockiert.

15. Stellglied nach Anspruch 14, wobei die Gegenlaufvorrichtung zwei steife Zwischenglieder umfasst, die jeweils ein erstes und ein zweite Ende aufweisen, wobei die Zwischenglieder drehbar zueinander an dem ersten Ende verbunden sind und drehbar zu dem beweglichen Element und dem beweglichen Hilfselement an dem zweiten Ende verbunden sind.

16. Stellglied nach Anspruch 1, wobei die Eingangs- und Ausgangslinien, entlang denen sich die Eingangs- und Ausgangsabschnitte des Umkehrmechanismus bewegen, parallel zueinander sind.

17. Stellglied nach Anspruch 1, wobei die Eingangs- und Ausgangslinien, entlang denen sich die Eingangs- und Ausgangsabschnitte des Umkehrmechanismus bewegen, derart in einem vorgegebenen Winkel in Bezug zueinander stehen, dass sich Verlängerungen derartiger Linien an einem Punkt kreuzen, der sich auf derselben Seite des Umkehrmechanismus bezüglich der Scheibe befindet.

## Revendications

1. Actionneur qui est adapté pour fournir une rotation et un couple en tant que sortie, comprenant :
- une poulie entraînée (11) ;
- un élément d'attache flexible (6), dans lequel ledit élément d'attache (6) est enroulé en partie autour de ladite poulie entraînée (11) et comporte des première et seconde parties d'élément d'attache qui possèdent respectivement des première et seconde extrémités (6', 6");
- un actionneur linéaire (7) qui comporte un élément mobile (10) qui est adapté pour fournir un mouvement selon deux directions opposées (10', 10") ;
**caractérisé en ce qu'**il comprend en outre :
- un mécanisme d'inversion (8) qui est relié audit élément mobile (10), ledit mécanisme d'inversion (8) possédant :
- une partie d'entrée (8') qui est reliée audit élément mobile (10) et à ladite première extrémité (6') dudit élément d'attache flexible (6),
- une partie de sortie (8") qui est reliée à ladite seconde extrémité (6") dudit élément d'attache flexible (6) ;
et **en ce que** ledit mécanisme d'inversion (8) est tel que :
- lorsque ledit élément mobile (10) se déplace dans ladite première direction (10'), un mouvement de traction d'entrée est créé de ladite première partie d'élément d'attache qui fournit une action de couple à ladite poulie (11) dans une première direction de rotation, avec ladite partie de sortie (8") qui effectue un mouvement de sortie conforme pour transporter ladite seconde partie d'élément d'attache, et
- lorsque ledit élément mobile (10) se déplace dans ladite seconde direction, un mouvement de traction de sortie est créé de ladite seconde partie d'élément d'attache qui fournit une action de couple à ladite poulie (11) dans une seconde direction de rotation qui est opposée à ladite première direction de rotation, de sorte que ladite partie d'entrée effectue un mouvement d'entrée qui suit ledit élément mobile de façon conforme pour transporter ladite première partie d'élément d'attache.

2. Actionneur selon la revendication 1, dans lequel ledit actionneur linéaire comporte ledit élément mobile qui est adapté pour fournir un mouvement le long d'une ligne selon deux directions opposées et monté par rapport à ladite poulie entraînée de sorte que ladite ligne soit sensiblement tangentielle à ladite poulie entraînée, ledit mécanisme d'inversion étant tel que, lorsque ladite partie d'entrée est déplacée le long de ladite ligne (ligne droite d'entrée) selon une quantité de mouvement déterminée, ladite partie de sortie est déplacée le long d'une autre ligne (ligne droite de sortie), qui est également sensiblement tangentielle à ladite poulie, selon une même quantité de mouvement.

3. Actionneur selon la revendication 1, dans lequel, lorsque ladite partie d'entrée est déplacée le long de ladite ligne droite, la longueur totale dudit élément d'attache flexible est inchangée.

4. Actionneur selon la revendication 1, dans lequel ladite partie d'élément d'attache qui est enroulée autour de ladite poulie entraînée est reliée à ladite poulie entraînée.

5. Actionneur selon la revendication 1, dans lequel ladite partie d'élément d'attache qui est enroulée autour de ladite poulie est discontinuée et reliée à ladite poulie entraînée en deux points de discontinuation respectifs.

6. Actionneur selon la revendication 1, dans lequel ledit actionneur linéaire comprend :
- un moteur rotatif qui est adapté pour fournir un mouvement circulaire ;
- une unité de réduction qui est adaptée pour recevoir ledit mouvement circulaire et pour le transformer en un mouvement linéaire ;
- une transmission mécanique qui transfère ledit mouvement linéaire audit élément mobile.

7. Actionneur selon la revendication 6, dans lequel ladite unité de réduction est un dispositif à écrou sphérique/vis, qui est approprié pour garantir moins de résistance au roulement entre la vis et l'écrou, ainsi que pour assurer une efficacité mécanique élevée et un jeu minimum, jusqu'à zéro, dans les deux directions de mouvement dudit élément mobile.

8. Actionneur selon la revendication 6, dans lequel ledit moteur rotatif est un moteur couple creux électrique, qui possède des rapports élevés de couple/poids et de couple/taille de sorte qu'une intégration aisée avec ledit dispositif de réduction à écrou/vis soit obtenue.

9. Actionneur selon la revendication 1, dans lequel ledit mécanisme d'inversion est un mécanisme pantographe comprenant un bras de support et un quadrilatère articulé, dans lequel une extrémité dudit bras forme ladite partie d'entrée et un sommet dudit pantographe, opposé à ladite extrémité, forme ladite partie de sortie et dans lequel ledit mécanisme pantographe est relié de façon pivotante à la structure fixe de l'actionneur (cadre) à un point qui est positionné sur une barre de base dudit quadrilatère articulé et sur la jonction entre ledit sommet dudit pantographe et ladite extrémité dudit bras.

10. Actionneur selon la revendication 1, dans lequel ledit mécanisme d'inversion comprend :
- un train d'engrenages constitué de premier et second engrenages, possédant un même rayon primitif, reliés indirectement par un engrenage intermédiaire, un support raide auquel lesdits engrenages sont reliés de façon pivotante, un premier bras qui est solidaire dudit premier engrenage et un second bras qui est solidaire dudit second engrenage, lesdits premier et second bras possédant des extrémités respectives qui forment ladite partie d'entrée et ladite partie de sortie dudit mécanisme d'inversion.

11. Actionneur selon la revendication 10, dans lequel lesdits engrenages sont des engrenages à coupe droite.

12. Actionneur selon la revendication 1, dans lequel ledit mécanisme d'inversion, comprend :
- un élément mobile auxiliaire qui possède un mouvement qui est opposé audit élément mobile, ledit mouvement opposé dudit élément mobile auxiliaire étant obtenu directement à partir dudit moteur, dans lequel ledit élément mobile auxiliaire forme ladite partie de sortie dudit mécanisme d'inversion.

13. Actionneur selon la revendication 12, dans lequel ledit mouvement opposé dudit élément mobile auxiliaire est obtenu directement à partir dudit moteur eu moyen de :
- un premier engrenage qui est adapté pour capter ledit mouvement circulaire à partir dudit moteur ;
- un second engrenage qui s'engrène avec ledit premier engrenage,
- un accouplement à écrou/vis entre ledit second engrenage et ledit élément mobile auxiliaire.

14. Actionneur selon la revendication 12, dans lequel ledit élément mobile et ledit élément mobile auxiliaire sont reliés l'un à l'autre par un dispositif anti-rotation qui bloque une rotation des vis autour de leur propre axe.

15. Actionneur selon la revendication 14, dans lequel ledit dispositif anti-rotation comprend deux liaisons raides, chacune possédant des première et seconde extrémités, lesdites liaisons étant reliées de façon pivotante l'une à l'autre à ladite première extrémité et reliées de façon pivotante audit élément mobile et audit élément mobile auxiliaire auxdites secondes extrémités.

16. Actionneur selon la revendication 1, dans lequel lesdites lignes d'entrée et de sortie le long desquelles lesdites parties d'entrée et de sortie du mécanisme d'inversion sont parallèles l'une à l'autre.

17. Actionneur selon la revendication 1, dans lequel lesdites lignes d'entrée et de sortie le long desquelles lesdites parties d'entrée et de sortie du mécanisme d'inversion se déplacent sont à un angle prédéterminé l'une par rapport à l'autre, de sorte que des prolongements de ces lignes se croisent en un point qui est positionné sur un même côté dudit mécanisme d'inversion par rapport à ladite poulie.
